# EUROPEAN PATENT APPLICATION

(11) **EP 4 564 753 A1**
(43) Date of publication of application: **04.06.2025**
(21) Application number: 22952280.0
(22) Date of filing: 26.07.2022
(51) Int. Cl.: H04L 27/00

(54) **BEAM REPORTING METHOD AND APPARATUS, ELECTRONIC DEVICE, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Dehns Germany Partnerschaft mbB
(86) International application number: PCT/CN2022/108053
(87) International publication number: WO 2024/020815

(57) **Abstract**

The present disclosure provides a beam reporting method and apparatus, an electronic device, and a storage medium. The method may comprise: receiving a CSI reporting configuration from an access network device, the CSI reporting configuration comprising a reporting amount corresponding to multi-panel uplink synchronous transmission; according to the CSI reporting configuration, performing beam measurement on N beams configured by the access network device, N being an integer greater than or equal to 1; and sending a CSI report to the access network device according to the measurement result, the CSI report carrying reporting amounts corresponding to M beams in the N beams, and M being an integer greater than or equal to 1 and less than or equal to N. In the present disclosure, a terminal device can determine, from a plurality of beams, beams of a plurality of panels suitable for simultaneous uplink transmission, and report beam information of the beams, thereby supporting transmission scheduling of uplink STxMP, and thus improving the throughput and reliability of uplink transmission.

## Description

### TECHNICAL FIELD

The present disclosure relates to the technical field of wireless communication, and in particular, to a beam reporting method and apparatus, an electronic device, and a storage medium.

### BACKGROUND

In the evolution of new radio (NR), multiple input multiple output (MIMO) enhancement needs to include uplink MIMO enhancement. Specifically, the terminal device may have multiple panels, and the terminal device can implement uplink transmission for multiple transmit/receive points (TRPs) through multiple panels, thereby further improving the throughput and reliability of uplink transmission.

Each panel of the terminal device corresponds to one user equipment (UE) capability value set index. For the terminal device with multiple panels, when the UE capability value set indexes corresponding to two panels are the same, the two panels cannot be distinguished.

In order to support uplink simultaneous transmission from multiple panels (STxMP), it is necessary to determine the beams of different panels suitable for simultaneous uplink transmission.

Then, how to support beam reporting of beams suitable for simultaneous uplink transmission on different panels is an urgent problem to be solved.

### SUMMARY

The present disclosure provides a beam reporting method and apparatus, an electronic device, and a storage medium to support uplink STxMP.

In a first aspect, the present disclosure provides a beam reporting method, which may be applied to a terminal device. The method may include: receiving a channel state information (CSI) report setting from the access network device, where the CSI report setting includes a report quantity corresponding to an uplink simultaneous transmission from multiple panels; performing a beam measurement on N beams configured by the access network device according to the CSI report setting, where N is an integer greater than or equal to 1; and sending a CSI report to the access network device according to a measurement result, where the CSI report carries reporting quantities corresponding to M beams among the N beams, and M is an integer greater than or equal to 1 and less than or equal to N.

In some possible implementations, the CSI report may further carry a terminal capability value set index corresponding to each of the M beams.

In some possible implementations, a reporting parameter based on beam pair in the CSI report setting may be configured to be enabled; the report quantity may include: a channel state information resource signal resource indicator (CSI-RS resource indicator, CRI) or a synchronization signal block resource indicator (SS/PBCH block resource indicator, SSBRI) corresponding to each of the M beams, and a multi-panel uplink simultaneous transmission parameter corresponding to the CRI or the SSBRI.

In some possible implementations, the report quantity may further include: a layer 1 reference signal received power (L1-RSRP) or a layer 1 signal to interference plus noise ratio (L1-SINR) corresponding to the CRI or the SSBRI.

In some possible implementations, the M beams may include M/2 beam pairs, each of the M/2 beam pairs corresponds to multiple panels of the terminal device one by one, and M is an integer greater than or equal to 2.

In some possible implementations, each beam pair in the M/2 beam pairs may be used for transmission between the terminal device and one transmit/receive point (TRP) or two TRPs.

In some possible implementations, a reporting parameter based on beam pair in the CSI report setting may be configured to be disabled; the report quantity may include: a CRI or SSBRI corresponding to each of the M beams, and an L1-RSRP or an L1-SINR corresponding to the CRI or the SSBRI.

In some possible implementations, the M beams may correspond to at least one panel of the terminal device one by one, and M is an integer greater than or equal to 2.

In some possible implementations, each of the M beams may be used for transmission between the terminal device and 1 TRP or 2 TRPs.

In some possible implementations, in a case of M=1, the M beam may be an optimal beam with an optimal beam measurement result among the N beams, and the CSI report carries a report quantity corresponding to the optimal beam.

In some possible implementations, the above method may further include: determining that one or more beams do not support the uplink simultaneous transmission from multiple panels; sending a CSI report to the access network device according to the measurement result, where the CSI report does not carry the report quantity corresponding to the one or more beams.

In some possible implementations, the reporting manner of the CSI report may include at least one of: periodic reporting; semi-periodic reporting; aperiodic reporting.

In some possible implementations, the CSI report may be used for at least one of: single downlink control information (S-DCI) scheduled transmission; multiple downlink control information (M-DCI) scheduled transmission.

In a second aspect, the present disclosure provides a beam reporting method, which may be applied to an access network device. The method may include: sending a channel state information (CSI) report setting to a terminal device, where the CSI report setting includes a report quantity corresponding to an uplink simultaneous transmission from multiple panels; and receiving a CSI report from the terminal device, where the CSI report carries report quantities corresponding to M beams among the N beams configured by the access network device, N is an integer greater than or equal to 1, and M is an integer greater than or equal to 1 and less than or equal to N.

In some possible implementations, a reporting parameter based on beam pair in the CSI report setting may be configured to be enabled; the report quantity may include: a CRI or an SSBRI corresponding to each of the M beams, and an L1-RSRP or an L1-SINR corresponding to the CRI or the SSBRI.

In some possible implementations, the M beams may include M/2 beam pairs, each beam pair in the M/2 beam pairs corresponds to multiple panels of the terminal device one by one, and M is an integer greater than or equal to 2.

In some possible implementations, each beam pair in the M/2 beam pairs may be used for transmission between the terminal device and one transmit/receive point (TRP) or two TRPs.

In some possible implementations, a reporting parameter based on beam pair in the CSI report setting may be configured to be disabled; the report quantity may include: a CRI or an SSBRI corresponding to each of the M beams, and a multi-panel uplink simultaneous transmission parameter corresponding to the CRI or the SSBRI.

In some possible implementations, the report quantity may further include: an L1-RSRP or an L1-SINR corresponding to the CRI or the SSBRI.

In some possible implementations, the M beams may correspond to at least one panel of the terminal device one by one, and M is an integer greater than or equal to 2.

In some possible implementations, each of the M beams may be used for transmission between the terminal device and 1 TRP or 2 TRPs.

In some possible implementations, in a case of M=1, the M beam may be an optimal beam with an optimal beam measurement result among the N beams, and the CSI report carries a report quantity corresponding to the optimal beam.

In some possible implementations, the CSI report does not carry report quantities corresponding to the N beams.

In some possible implementations, a reporting manner of the CSI report may include at least one of: periodic reporting; semi-periodic reporting; aperiodic reporting.

In some possible implementations, the CSI report may be used for at least one of: S-DCI scheduled transmission; M-DCI scheduled transmission.

In a third aspect, the present disclosure provides a beam reporting apparatus. The apparatus may be a terminal device (such as a UE) or a chip or a system on chip in the terminal device, or may be a functional module in the terminal device for implementing the methods described in the above aspects. The beam reporting apparatus can realize the functions performed by the terminal device in the above aspects, and these functions can be realized by hardware executing corresponding software. The hardware or software include one or more modules corresponding to the above functions. The above apparatus includes: a receiving module configured to receive a channel state information (CSI) report setting from an access network device, where the CSI report setting includes a report quantity corresponding to an uplink simultaneous transmission from multiple panels; a processing module configured to, perform a beam measurement on N beams configured by the access network device according to the CSI report setting, where N is an integer greater than or equal to 1; a sending module, configured to send a CSI report to the access network device according to a measurement result, where the CSI report carries report quantities corresponding to M beams among the N beams, and M is an integer greater than or equal to 1 and less than or equal to N.

In some possible implementations, the CSI report may further carry a terminal capability value set index corresponding to each of the M beams.

In some possible implementations, a reporting parameter based on beam pair in the CSI report setting may be configured to be enabled; the report quantity may include: a CRI or an SSBRI corresponding to each of the M beams, and an L1-RSRP or an L1-SINR corresponding to the CRI or the SSBRI.

In some possible implementations, the M beams may include M/2 beam pairs, each of the M/2 beam pairs corresponds to multiple panels of the terminal device one by one, and M is an integer greater than or equal to 2.

In some possible implementations, each beam pair in the M/2 beam pairs may be used for transmission between the terminal device and one transmit/receive point (TRP) or two TRPs.

In some possible implementations, a reporting parameter based on beam pair in the CSI report setting may be configured to be disabled; the report quantity may include: a CRI or an SSBRI corresponding to each of the M beams, and a multi-panel uplink simultaneous transmission parameter corresponding to the CRI or the SSBRI.

In some possible implementations, the report quantity may also include: an L1-RSRP or an L1-SINR corresponding to the CRI or the SSBRI.

In some possible implementations, the M beams may correspond to at least one panel of the terminal device one by one, and M is an integer greater than or equal to 2.

In some possible implementations, each of the M beams may be used for transmission between the terminal device and 1 TRP or 2 TRPs.

In some possible implementations, in a case of M=1, the M beam may be an optimal beam with an optimal beam measurement result among the N beams, and the CSI report carries a report quantity corresponding to the optimal beam.

In some possible implementations, the processing module may further be configured to: determine that one or more beams do not support the uplink simultaneous transmission from multiple panels; the sending module may further be configured to: send a CSI report to the access network device according to the measurement result, where the CSI report does not carry the report quantity corresponding to the one or more beams.

In some possible implementations, a reporting manner of the CSI report may include at least one of: periodic reporting; semi-periodic reporting; aperiodic reporting.

In some possible implementations, the CSI may be used for at least one of: S-DCI scheduled transmission; M-DCI scheduled transmission.

In a fourth aspect, the present disclosure provides a beam reporting apparatus. The apparatus may be an access network device (such as a gNB) or a chip or a system on chip in the access network device, or may be a functional module in the access network device for implementing the methods described in the above aspects. The beam reporting apparatus can realize the functions performed by the access network device in the above aspects, and these functions can be realized by hardware executing corresponding software. The hardware or software include one or more modules corresponding to the above functions. The above apparatus includes: a sending module, configured to send a CSI report setting to a terminal device, where the CSI report setting includes a report quantity corresponding to an uplink simultaneous transmission from multiple panels; and a receiving module, configured to receive a CSI report from the terminal device, where the CSI report carries report quantities corresponding to M beams among N beams configured by the access network device, N is an integer greater than or equal to 1, and M is an integer greater than or equal to 1 and less than or equal to N.

In some possible implementations, the CSI report may further carry a terminal capability value set index corresponding to each of the M beams.

In some possible implementations, a reporting parameter based on beam pair in the CSI report setting may be configured to be enabled; the report quantity may include: a CRI or an SSBRI corresponding to each of the M beams, and a multi-panel uplink simultaneous transmission parameter corresponding to the CRI or the SSBRI.

In some possible implementations, the report quantity may further include: an L1-RSRP or an L1-SINR corresponding to the CRI or the SSBRI.

In some possible implementations, the M beams may include M/2 beam pairs, each of the M/2 beam pairs corresponds to multiple panels of the terminal device one by one, and M is an integer greater than or equal to 2.

In some possible implementations, each of the M/2 beam pairs may be used for transmission between the terminal device and one transmit/receive point (TRP) or two TRPs.

In some possible implementations, a reporting parameter based on beam pair in the CSI report setting may be configured to be disabled; the report quantity may include: a CRI or an SSBRI corresponding to each beam in the M beams, and an L1-RSRP or an L1-SINR corresponding to the CRI or the SSBRI.

In some possible implementations, the M beams may correspond to at least one panel of the terminal device one by one, and M is an integer greater than or equal to 2.

In some possible implementations, each of the M beams may be used for transmission between the terminal device and 1 TRP or 2 TRPs.

In some possible implementations, in a case of M=1, the M beam may be an optimal beam with an optimal beam measurement result among the N beams, and the CSI report carries a report quantity corresponding to the optimal beam.

In some possible implementations, the CSI report does not carry report quantities corresponding to the N beams.

In some possible implementations, a reporting manner of the CSI report may include at least one of: periodic reporting; semi-periodic reporting; aperiodic reporting.

In some possible implementations, the CSI may be used for at least one of: S-DCI scheduled transmission; M-DCI scheduled transmission.

In a fifth aspect, the present disclosure provides an electronic device, including: a memory, configured to store computer-executable instructions; a processor, connected to the memory and configured to execute the computer-executable instructions to implement the beam reporting method described in any of the first and second aspects and their possible implementations.

In a sixth aspect, the present disclosure provides a computer storage medium that stores computer-executable instructions. After the computer-executable instructions are executed by a processor, the computer-executable instructions can implement the beam reporting method described in any of the first and second aspects and their possible implementations.

In the present disclosure, the terminal device can determine the beams of multiple panels suitable for simultaneous uplink transmission from the multiple beams, and report the beam information of the beams. In this way, the beam reporting mechanism is enhanced. Even if the multiple panels have the same UE capability value set index, these panels can be distinguished, so that the network side can confirm the beams simultaneously transmitted by these panels, thereby supporting uplink STxMP transmission scheduling, and improving the throughput and reliability of uplink transmission.

It should be understood that the second to fourth aspects of the present disclosure are consistent with the technical solution of the first aspect of the present disclosure, and the beneficial effects achieved by each aspect and corresponding feasible implementations are similar, and will not be described again.

### BRIEF DESCRIPTION OF THE DRAWINGS

FIG. 1 is a schematic diagram of a transmission scenario between a terminal device and two TRPs.
FIG. 2 is a schematic flowchart of a beam reporting method in an embodiment of the present disclosure.
FIG. 3 is a schematic flowchart of a beam reporting method in an embodiment of the present disclosure.
FIG. 4 is a schematic structural diagram of a beam reporting apparatus in an embodiment of the present disclosure.
FIG. 5 is a schematic structural diagram of a beam reporting apparatus in an embodiment of the present disclosure.
FIG. 6 is a schematic structural diagram of an electronic device in an embodiment of the present disclosure.
FIG. 7 is a schematic structural diagram of a terminal device in an embodiment of the present disclosure.
FIG. 8 is a schematic structural diagram of an access network device in an embodiment of the present disclosure.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the embodiments of the present disclosure. Rather, they are merely examples of apparatus and methods consistent with some aspects of the embodiments of the present disclosure recited in the appended claims.

The terms used in the embodiments of the present disclosure are for the purpose of describing specific embodiments only and are not intended to limit the embodiments of the present disclosure. As used in the embodiments and the appended claims of the present disclosure, the singular forms "a/an" and "the/said" are intended to include the plural forms as well, unless the context clearly dictates otherwise. It should also be understood that the term "and/or" as used herein refers to and includes any or all possible combinations of one or more of the items listed in the associated list.

It should be understood that although the terms first, second, third, etc. may be used to describe various information in the embodiments of the present disclosure, the information should not be limited to these terms. These terms are only used to distinguish information of the same type from each other. For example, without departing from the scope of the embodiments of the present disclosure, the first information may also be called second information, and similarly, the second information may also be called first information. Depending on the context, the word "if" as used herein may be interpreted as "when" or "upon" or "in response to determination."

Further, in the description of the embodiments of the present disclosure, "and/or" is only an association relationship describing associated objects, indicating that three relationships may exist. For example, A and/or B may mean the following three situations: A exists alone, A and B exist simultaneously, B exists alone. In addition, in the description of the embodiments of the present disclosure, "multiple" may refer to two or more than two.

In the evolution of new radio (NR), multiple input multiple output (MIMO) enhancement needs to include uplink MIMO enhancement. Specifically, the terminal device may have multiple panels, and the terminal device can implement uplink transmission for multiple transmit/receive points (TRPs) through multiple panels. In this way, on the one hand, the throughput and reliability of uplink transmission can be improved, and on the other hand, the transmission delay in the scenario of multiple TRPs can be reduced.

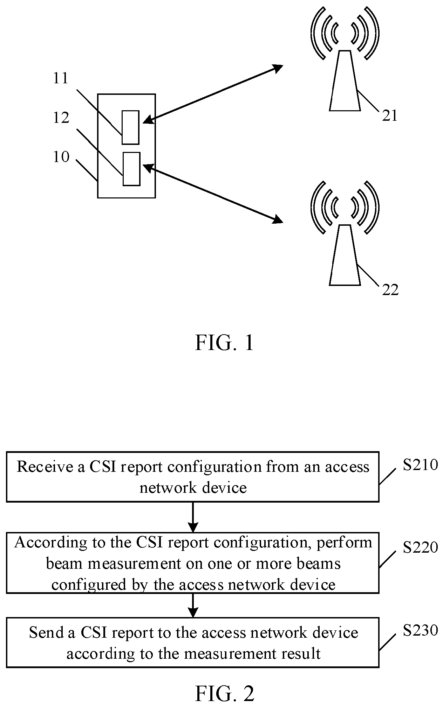

FIG. 1 is a schematic diagram of a transmission scenario between a terminal device and two TRPs. As shown in FIG. 1, the terminal device 10 has a panel 11 and a panel 12. The panel 11 is used for transmission with TRP 21. The panel 12 is used for transmission with TRP 22. When working, the terminal device 10 realizes coordinated transmission with TRP 21 and TRP 22 through the panel 11 and the panel 12. It should be noted that TRP 21 and TRP 22 may be provided on the same access network device, or they may be provided on different access network devices. It can be understood that only the transmission between the terminal device 10 with two panels 11, 12 and TRPs 21, 22 is shown in FIG. 1. However, the terminal device may also have more than two panels to enable transmission with more than two TRPs.

However, each panel of the terminal device corresponds to one user equipment (UE) capability value set index. For the terminal device with multiple panels, when the UE capability value set indexes corresponding to two panels are the same, the two panels cannot be distinguished. In order to support uplink simultaneous transmission from multiple panels (STxMP), it is necessary to determine the beams of different panels suitable for simultaneous uplink transmission.

Then, how to support beam reporting of beams suitable for simultaneous uplink transmission of different panels is an urgent problem to be solved.

In order to solve the above problems, the embodiments of the present disclosure provide a beam reporting method.

The beam reporting method may be applied to a terminal device. The above terminal device may be a terminal device with a wireless communication function, and may also be called a UE. The terminal device may be deployed on land, including indoors or outdoors, handheld, wearable or vehicle-mounted; it may also be deployed on water (such as on the ship, etc.); it may also be deployed in the air (such as on the aircraft, balloon, satellite, etc.). The above-mentioned terminal device may be a mobile phone, a tablet computer (Pad), a computer with wireless transceiver function, a virtual reality (VR) terminal apparatus, an augmented reality (AR) terminal apparatus, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, etc. The terminal device may also be a handheld device with wireless communication capabilities, a vehicle-mounted device, a wearable device, a computing device, or other processing device connected to a wireless modem, etc. Optionally, the terminal apparatus can also be called by different names in different networks, for example: a terminal apparatus, an access terminal, a subscriber unit, a subscriber station, a mobile station, a mobile, a remote station, a remote terminal, a mobile device, a user terminal, a terminal, a wireless communication device, a user agent or a user apparatus, a cellular phone, a cordless phone, a session initiation protocol (SIP) phone, a wireless local loop (WLL) station, a personal digital assistant (PDA), a terminal device in 5G network or in future evolution networks, etc.

FIG. 2 is a schematic flowchart of a beam reporting method in an embodiment of the present disclosure. As shown in FIG. 2, the beam reporting method includes S210 to S230.

In S210, a CSI report setting from an access network device is received.

The CSI report setting (report configuration) includes a report quantity corresponding to uplink simultaneous transmission from multiple panels.

In practical applications, the CSI report setting may be used for beam management. Specifically, the CSI report setting may be used for beam measurement and beam reporting in the beam management, thereby informing the access network device of beam information suitable for transmission.

In an embodiment, the report quantity corresponding to the uplink simultaneous transmission from multiple panels in the CSI report setting may include a report quantity used to indicate uplink simultaneous transmission from multiple panels (i.e., uplink STxMP). Therefore, the report quantity may also be called an uplink STxMP parameter. In an example, for the case where the report quantity includes CRI, the uplink STxMP parameter may be related to the CRI, such as cri-STxMP parameter. In another example, for the case where the report quantity includes SSBRI, the uplink STxMP parameter may be related to SSBRI, for example, ssb-STxMP parameter.

It can be understood that, in a possible implementation, the uplink STxMP parameter may be used to indicate whether the corresponding beam supports the uplink simultaneous transmission from multiple panels. In this case, the value of the uplink STxMP parameter may be 0 or 1, for example. Specifically, if the value of the uplink STxMP parameter is 0, it means that the beam does not support the uplink simultaneous transmission from multiple panels; if the value of the uplink STxMP parameter is 1, it means that the beam supports the uplink simultaneous transmission from multiple panels. Other indication manners may also be used for the uplink STxMP parameter, which are not specifically limited in the embodiments of the present application.

Usually, the CSI report setting may also include at least one of the following report quantities: a channel qualify indicator (CQI), a precoding matrix indicator (PMI), a CRI, an SSBRI, a layer indicator (LI), a rank indicator (RI), an L1-RSRP, an L1-SINR.

In an embodiment, the CSI report setting may also include a group-based beam reporting (groupBasedBeamReporting) parameter. The group-based beam reporting parameter may be configured as enabled or disabled. When the group-based beam reporting parameter is configured to be enabled, beam reporting is based on beam group; when the group-based beam reporting parameter is configured to be disabled, beam reporting is based on non-beam group.

In an embodiment, the CSI report setting may also include a UE capability value set identifier (UE capability value set index). The terminal capability value set index is used to indicate the capability value of the terminal.

In an embodiment, the CSI report setting may be carried in high-layer signaling and delivered by the access network device. For example, the above-mentioned high-layer signaling may be a radio resource control (RRC) signaling, a signaling carried by a medium access control (MAC) control element (CE), a physical uplink shared channel (PUSCH), a physical uplink control channel (PUCCH), etc.

In S220, beam measurement is performed on N beams configured by the access network device according to the CSI report setting.

After receiving the CSI report setting in S210, the terminal device performs beam measurement on N beams from the access network device. In an embodiment, the terminal device can measure all beams transmitted by the access network device. At this time, the number of all beams may be N. In an embodiment, the terminal device may measure part of the beams transmitted by the access network device. At this time, the number of all beams may be greater than N, and then the number of the measured part of the beams may be N. N may be an integer greater than or equal to 1.

It can be understood that, in the procedure of the terminal device performing beam measurement on N beams from the access network device, the terminal device may measure and determine one or more of the report quantities in the CSI report setting.

In S230, a CSI report is sent to the access network device according to the measurement result.

The CSI report carries the report quantity corresponding to M beam(s), where M is an integer greater than or equal to 1.

It can be understood that before sending the CSI report, the terminal device can determine M beams. In an embodiment, the terminal device may determine the M beams according to its own software and/or hardware configuration. In another embodiment, the terminal device may determine M beams according to the measurement result of the beam measurement. In yet another embodiment, the terminal device may determine the M beams according to its own software and/or hardware configuration and the measurement result of the beam measurement.

It should be noted that the report quantity in the CSI report setting refers to the report quantity parameter; correspondingly, the report quantity corresponding to the M beams carried in the CSI report is usually the value of the report quantity parameter.

In an embodiment, the reporting parameter based on beam pair in the CSI report setting can be configured to be enabled; then the report quantity may include: the CRI or SSBRI corresponding to each beam in the M beams, and the L1-RSRP or L1-SINR corresponding to the CRI or SSBRI. In an example, the report quantity may include the CRI corresponding to each of the M beams. In this case, the report quantity may also include L1-RSRP (for example, cri-RSRP parameter) corresponding to the CRI, or may include L1-SINR (for example, cri-SINR parameter) corresponding to the CRI. In another example, the report quantity may include the SSB (SS/PBCH block) corresponding to each of the M beams. In this case, the report quantity may also include the L1-RSRP (for example, ssb-index-RSRP parameter) corresponding to the SSB, or may include the L1-SINR (for example, ssb-index-SINR parameter) corresponding to the SSB.

In an embodiment, M beams may include M/2 beam pair(s), each of the M/2 beam pairs corresponds to multiple panels of the terminal device, and M is an integer greater than or equal to 2. Specifically, in the case that the reporting parameter based on beam pair in the CSI report setting can be configured to be enabled, M beams can be divided into beam pairs, and each beam pair includes two beams. Therefore, M beams can be divided into M/2 beam pairs. The M/2 beam pairs are in one-to-one correspondence with the panels of the terminal device. For example, the number of beam pairs M/2 and the number of panels may be the same. For another example, the number of beam pairs M/2 may be smaller than the number of panels, and then M/2 panels in all panels of the terminal device may be used to support M/2 beam pairs.

In an embodiment, each of the M/2 beam pairs may be used for transmission between the terminal device and 1 TRP or 2 TRPs. In an example, each beam pair can be used for coordinated transmission between 2 panels of the terminal device and the same TRP. In another example, each beam pair may be used for transmission between 2 panels of the terminal device and 2 TRPs.

In an embodiment, the reporting parameter based on beam pair in the CSI report setting can be configured to be disabled; then the report quantity can include: the CRI or SSBRI corresponding to each of the M beams, and the L1-RSRP or L1-SINR corresponding to the CRI or SSBRI. In an example, the report quantity may include the CRI corresponding to each of the M beams. In this case, the report quantity may also include L1-RSRP (for example, cri-RSRP parameter) corresponding to the CRI, or may include L1-SINR (for example, cri-SINR parameter) corresponding to the CRI. In another example, the report quantity may include the SSB (SS/PBCH block) corresponding to each of the M beams. In this case, the report quantity may also include the L1-RSRP (for example, the ssb-index-RSRP parameter) corresponding to the SSB, or may include the L1-SINR (for example, the ssb-index-SINR parameter) corresponding to the SSB.

It should be noted that when the reporting parameter based on beam pair in the CSI report setting can be configured to be disabled, the number M of beams whose report quantities are carried in the CSI report may be received by the terminal device from the access network device through high-layer signaling. For example, the above-mentioned high-layer signaling may be RRC signaling, signaling carried by MAC CE, PUSCH, PUCCH, etc.

In addition, regardless of whether beam reporting is group-based or non-group-based, the number of beams for measurement reporting can be enhanced to increase the number of beams that can be reported. For example, in the case that beam reporting is group-based, a parameter may be added or an existing parameter may be adjusted in the high-layer signaling to configure the number of reported beam pairs. For another example, in the case that beam reporting is non-group-based, the nrofReportedRS parameter may be extended to increase the number of reported beams.

In an embodiment, the CSI report may also carry the terminal capability value set index corresponding to each beam in the M beams. Specifically, the CSI report setting may also carry the terminal capability value set index corresponding to each of the M beams. It should be noted that the terminal capability value set indexes corresponding to different beams may be the same or different. Since the M/2 beam pairs correspond to respective panels, or the M beams correspond to respective panels, the panels of the terminal device correspond to respective beams or beam pairs, and therefore correspond to respective terminal capability value set indexes. Similarly, the terminal capability value set indexes corresponding to different panels may be the same or different.

In a possible implementation, when M=1, the M beam may be the optimal beam with the optimal beam measurement result among the N beams, and the CSI report carries the report quantity corresponding to the optimal beam. Specifically, the value of M may be 1. This means that the terminal device does not have multiple beams capable of supporting uplink simultaneous transmission from multiple panels. In this case, the terminal device may select at least one optimal report quantity from all the report quantities obtained by beam measurement, and determine the beam corresponding to the optimal report quantity. This beam is the optimal beam with the optimal beam measurement result. In this way, the terminal device may carry the report quantity corresponding to the optimal beam in the CSI report.

In a possible implementation, the above method may further include: determining that one or more beams do not support the uplink simultaneous transmission from multiple panels; sending a CSI report to the access network device according to the measurement result, where the CSI report does not carry the report quantity corresponding to one or more beam. Specifically, the terminal device may not be able to perform uplink transmission with TRP through any beam. In this case, the terminal device may determine that one or more beams do not support uplink simultaneous transmission from multiple panels. Afterwards, the CSI report sent by the terminal device to the access network device may not carry the report quantity corresponding to any beam.

In practical applications, the reporting manner of the CSI report may include at least one of the following: periodic CSI (P-CSI); semi-periodic CSI (semi-persistent, SP-CSI); aperiodic CSI (AP-CSI). For example, the terminal device may support P-CSI by default. For another example, the terminal device may support P-SCI, and SP-CSI and/or AP-CSI.

In addition, the CSI may be used for at least one of the following: S-DCI scheduled transmission; M-DCI scheduled transmission.

Based on the same inventive concept, in order to solve the above problem, the embodiments of the present disclosure also provide another beam reporting method, which can be applied to an access network device (for example, a base station or other access network device).

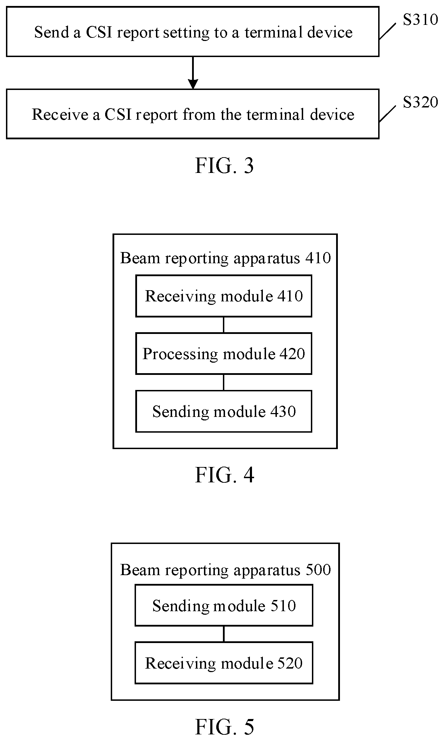

FIG. 3 is a schematic flowchart of a beam reporting method in an embodiment of the present disclosure. As shown in FIG. 3, the beam reporting method includes S310 to S320.

In S310, a CSI report setting is sent to a terminal device.

The CSI report setting includes a reporting quantity corresponding to an uplink simultaneous transmission from multiple panels.

In practical applications, the CSI report setting can be used for beam management. Specifically, the CSI report setting can be used for beam measurement and beam reporting in the beam management, thereby informing the access network device of beam information suitable for transmission.

In an embodiment, the report quantity corresponding to the uplink simultaneous transmission from multiple panels in the CSI report setting is the report quantity used to indicate the uplink simultaneous transmission from multiple panels (i.e., uplink STxMP). Therefore, this report quantity may also be called an uplink STxMP parameter. In an example, for the case where the report quantity includes CRI, the uplink STxMP parameter may be related to the CRI, such as the cri-STxMP parameter. In another example, for the case where the report quantity includes SSBRI, the uplink STxMP parameter may be related to SSBRI, for example, the ssb-STxMP parameter.

It can be understood that, in a possible implementation, the uplink STxMP parameter may be used to indicate whether the corresponding beam supports the uplink simultaneous transmission from multiple panels. In this case, the value of the uplink STxMP parameter may be 0 or 1, for example. Specifically, if the value of the uplink STxMP parameter is 0, it means that the beam does not support the uplink simultaneous transmission from multiple panels; if the value of the uplink STxMP parameter is 1, it means that the beam supports the uplink simultaneous transmission from multiple panels. Other indication manners may also be used for the uplink STxMP parameter, which are not specifically limited in the embodiments of the present application.

Generally, the CSI report setting may also include at least one of the following report quantities: CQI, PMI, CRI, SSBRI, LI, RI, L1-RSRP, and L1-SINR.

In an embodiment, the CSI report setting may also include group-based beam reporting parameter. The group-based beam reporting parameter may be configured as enabled or disabled. When the group-based beam reporting parameter is configured to be enabled, beam reporting is based on beam group; when the group-based beam reporting parameter is configured to be disabled, beam reporting is based on non-beam group.

In an embodiment, the CSI report setting may also include a terminal capability value set index. The terminal capability value set index is used to indicate the capability value of the terminal.

In an embodiment, the CSI report setting may be carried in high-layer signaling and delivered by the access network device. For example, the above-mentioned high-layer signaling may be RRC signaling, signaling carried by MAC CE, PUSCH, PUCCH, etc.

It can be understood that the CSI report setting sent to the terminal device in S310 may be configured by the access network device. For example, the CSI report setting may be configured by the access network device according to its own information and the information of the terminal device. For another example, the CSI report setting may be determined through negotiation between the access network device and the terminal device. For another example, the CSI report setting may be configured based on input information of the user.

In S320, a CSI report from the terminal device is received.

The CSI report carries the report quantity corresponding to M beams, where M is an integer greater than or equal to 1.

In an embodiment, the reporting parameter based on beam pair in the CSI report setting can be configured to be enabled; then the report quantity may include: the CRI or SSBRI corresponding to each beam in the M beams, and the L1-RSRP or L1-SINR corresponding to the CRI or SSBRI. In an example, the report quantity may include the CRI corresponding to each of the M beams. In this case, the report quantity may also include L1-RSRP (e.g., cri-RSRP parameter) corresponding to the CRI, or may include L1-SINR (e.g., cri-SINR parameter) corresponding to the CRI. In another example, the report quantity may include the SSB (SS/PBCH block) corresponding to each of the M beams. In this case, the report quantity may also include the L1-RSRP (for example, the ssb-index-RSRP parameter) corresponding to the SSB, or may include the L1-SINR (for example, the ssb-index-SINR parameter) corresponding to the SSB.

In an embodiment, M beams may include M/2 beam pair(s), each of the M/2 beam pairs corresponds to multiple panels of the terminal device, and M is an integer greater than or equal to 2. Specifically, in the case that the reporting parameter based on beam pair in the CSI report setting can be configured to be enabled, M beams can be divided into beam pairs, and each beam pair includes two beams. Therefore, M beams can be divided into M/2 beam pairs. The M/2 beam pairs are in one-to-one correspondence with the panels of the terminal device. For example, the number of beam pairs M/2 and the number of panels may be the same. For another example, the number of beam pairs M/2 may be smaller than the number of panels, and then M/2 panels in all panels of the terminal device may be used to support M/2 beam pairs.

In an embodiment, the reporting parameter based on beam pair in the CSI report setting can be configured to be disabled; then the report quantity can include: the CRI or SSBRI corresponding to each of the M beams, and the L1-RSRP or L1-SINR corresponding to the CRI or SSBRI. In an example, the report quantity may include the CRI corresponding to each of the M beams. In this case, the report quantity may also include L1-RSRP (e.g., cri-RSRP parameter) corresponding to the CRI, or may include L1-SINR (e.g., cri-SINR parameter) corresponding to the CRI. In another example, the report quantity may include the SSB (SS/PBCH block) corresponding to each of the M beams. In this case, the report quantity may also include the L1-RSRP (for example, the ssb-index-RSRP parameter) corresponding to the SSB, or may include the L1-SINR (for example, the ssb-index-SINR parameter) corresponding to the SSB.

It should be noted that when the reporting parameter based on beam pair in the CSI report setting can be configured to be disabled, the number M of beams whose the report quantities are carried in the CSI report may be configured by the access network device for the terminal device through high-layer signaling. For example, the above-mentioned high-layer signaling may be RRC signaling, signaling carried by MAC CE, PUSCH, PUCCH, etc.

In addition, regardless of whether beam reporting is group-based or non-group-based, the number of beams for measurement reporting can be enhanced to increase the number of beams that can be reported. For example, in the case that beam reporting is group-based, a parameter may be added or an existing parameter may be adjusted in high-layer signaling to configure the number of reported beam pairs. For another example, in the case that beam reporting is non-group-based, the nrofReportedRS parameter may be extended to increase the number of reported beams.

In an embodiment, the CSI report may also carry the terminal capability value set index corresponding to each beam in the M beams. Specifically, the CSI report setting may also carry the terminal capability value set index corresponding to each of the M beams. It should be noted that the terminal capability value set indexes corresponding to different beams may be the same or different. Since the M/2 beam pairs correspond to respective panels, or the M beams correspond to respective panels, the panels of the terminal device correspond to respective beams or beam pairs, and therefore correspond to respective terminal capability value set indexes. Similarly, the terminal capability value set indexes corresponding to different panels may be the same or different.

In a possible implementation, when M=1, the M beam may be the optimal beam with the optimal beam measurement result among the N beams, and the CSI report carries the report quantity corresponding to the optimal beam. Specifically, the value of M may be 1. This means that the terminal device does not have multiple beams capable of supporting uplink simultaneous transmission from multiple panels. In this way, the terminal device can carry the report quantity corresponding to the optimal beam in the CSI report.

In a possible implementation, the terminal device may not be able to perform uplink transmission with the TRP through any beam. In this case, the CSI report may not carry the report quantity corresponding to any beam.

In practical applications, the reporting manner of the CSI report may include at least one of the following: periodic CSI (P-CSI); semi-periodic CSI (semi-persistent, SP-CSI); aperiodic CSI (AP-CSI). For example, the terminal device may support P-CSI by default. For another example, the terminal device may support P-SCI, and SP-CSI and/or AP-CSI.

In addition, the CSI may be used for at least one of the following: S-DCI scheduled transmission; M-DCI scheduled transmission.

It can be understood that the beam reporting method on the access network device side is the opposite end method to the beam reporting method on the terminal device side. Therefore, the specific details of each step in this method can be referred to the description of the method on the terminal device side, and will not be described again here.

In the embodiments of the present disclosure, the terminal device can determine the beams of multiple panels suitable for simultaneous uplink transmission from the multiple beams, and report the beam information of the beams. In this way, the beam reporting mechanism is enhanced. Even if multiple panels have the same UE capability value set index, these panels can be distinguished, so that the network side can confirm the beams transmitted by these panels at the same time, thereby supporting uplink STxMP transmission scheduling, and improving the throughput and reliability of uplink transmission.

Based on the same inventive concept, the embodiments of the present disclosure also provide a beam reporting apparatus. The beam reporting apparatus may be a terminal device or a chip or system-on-chip in the terminal device, or may be a functional module in the terminal device for implementing the methods described in the above embodiments. The beam reporting apparatus can realize the functions performed by the terminal device in the above embodiments, and these functions can be realized by hardware executing corresponding software. The hardware or software include one or more modules corresponding to the above functions.

FIG. 4 is a schematic structural diagram of a beam reporting apparatus in an embodiment of the present disclosure. As shown in FIG. 4, the beam reporting apparatus 400 may include: a receiving module 410, configured to receive a channel state information (CSI) report setting from an access network device, where the CSI report setting includes a report quantity corresponding to an uplink simultaneous transmission from multiple panels; a processing module 420, configured to perform beam measurement on N beams configured by the access network device according to the CSI report setting; a sending module 430, configured to send a CSI report to the access network device according to a measurement result, where the CSI report carries report quantity corresponding to M beams, and M is an integer greater than or equal to 1.

In some possible implementations, the CSI report may also carry a terminal capability value set index corresponding to each of the M beams.

In some possible implementations, a reporting parameter based on beam pair in the CSI report setting may be configured to be enabled; the report quantity may include: a CRI or SSBRI corresponding to each of the M beams, and an L1-RSRP or L1-SINR corresponding to the CRI or SSBRI.

In some possible implementations, the M beams may include M/2 beam pair(s), each of the M/2 beam pairs corresponds to multiple panels of the terminal device one by one, and M is an integer greater than or equal to 2.

In some possible implementations, each of the M/2 beam pairs may be used for transmission between the terminal device and one transmit/receive point (TRP) or two TRPs.

In some possible implementations, a reporting parameter based on beam pair in the CSI report setting can be configured to be disabled; the report quantity may include: a CRI or SSBRI corresponding to each beam in the M beams, and a multi-panel uplink simultaneous transmission parameter corresponding to the CRI or SSBRI.

In some possible implementations, the report quantity may also include: L1-RSRP or L1-SINR corresponding to CRI or SSBRI.

In some possible implementations, the M beams may correspond to at least one panel of the terminal device one by one, and M is an integer greater than or equal to 2.

In some possible implementations, each of the M beams may be used for transmission between the terminal device and 1 TRP or 2 TRPs.

In some possible implementations, when M=1, the M beam may be the optimal beam with optimal beam measurement result among the N beams, and the CSI report carries the report quantity corresponding to the optimal beam.

In some possible implementations, the processing module 420 may also be configured to: determine that one or more beams do not support the uplink simultaneous transmission from multiple panels; the sending module 430 may also be configured to: send a CSI report to the access network device according to the measurement result, where the CSI report does not carry the report quantity corresponding to one or more beams.

In some possible implementations, the reporting manner of the CSI report may include at least one of the following: periodic reporting; semi-periodic reporting; aperiodic reporting.

In some possible implementations, the CSI may be used for at least one of the following: S-DCI scheduled transmission; M-DCI scheduled transmission.

Based on the same inventive concept, the embodiments of the present disclosure also provide a beam reporting apparatus. The beam reporting apparatus may be an access network device or a chip or a system-on-chip in the access network device, or may be a functional module in the access network device for implementing the methods described in the above embodiments. The beam reporting apparatus can realize the functions performed by the access network device in the above embodiments, and these functions can be realized by hardware executing corresponding software. The hardware or software include one or more modules corresponding to the above functions.

FIG. 5 is a schematic structural diagram of a beam reporting apparatus in an embodiment of the present disclosure. As shown in FIG. 5, the beam reporting apparatus 500 may include: a sending module 510, configured to send a CSI report setting to a terminal device, where the CSI report setting includes a report quantity corresponding to an uplink simultaneous transmission from multiple panels; a receiving module 520, configured to receive a CSI report from the terminal device, where the CSI report carries a report quantity corresponding to M beams, and M is an integer greater than or equal to 1.

In some possible implementations, the CSI report may also carry a terminal capability value set index corresponding to each of the M beams.

In some possible implementations, the reporting parameter based on beam pair in the CSI report setting can be configured to be enabled; the report quantity may include: a CRI or SSBRI corresponding to each beam in the M beams, and a multi-panel uplink simultaneous transmission parameter corresponding to the CRI or SSBRI.

In some possible implementations, the report quantity may also include: L1-RSRP or L1-SINR corresponding to CRI or SSBRI.

In some possible implementations, M beams may include M/2 beam pairs, each of the M/2 beam pairs corresponds to multiple panels of the terminal device one by one, and M is an integer greater than or equal to 2.

In some possible implementations, each of the M/2 beam pairs can be used for transmission between the terminal device and one transmit/receive point (TRP) or two TRPs.

In some possible implementations, the reporting parameter based on beam pair in the CSI report setting can be configured to be disabled; the report quantity may include: the CRI or SSBRI corresponding to each of the M beams, and L1-RSRP or L1-SINR corresponding to the CRI or SSBRI.

In some possible implementations, M beams may correspond to at least one panel of the terminal device one by one, and M is an integer greater than or equal to 2.

In some possible implementations, each of the M beams may be used for transmission between the terminal device and 1 TRP or 2 TRPs.

In some possible implementations, when M=1, the M beam may be the optimal beam with the optimal beam measurement result among the N beams, and the CSI report carries the report quantity corresponding to the optimal beam.

In some possible implementations, the receiving module 520 may also be configured to: receive a CSI report from the terminal device, and the CSI report does not carry the report quantity corresponding to one or more beams.

In some possible implementations, the reporting manner of the CSI report may include at least one of the following: periodic reporting; semi-periodic reporting; aperiodic reporting.

In some possible implementations, CSI may be used for at least one of the following: S-DCI scheduled transmission; M-DCI scheduled transmission.

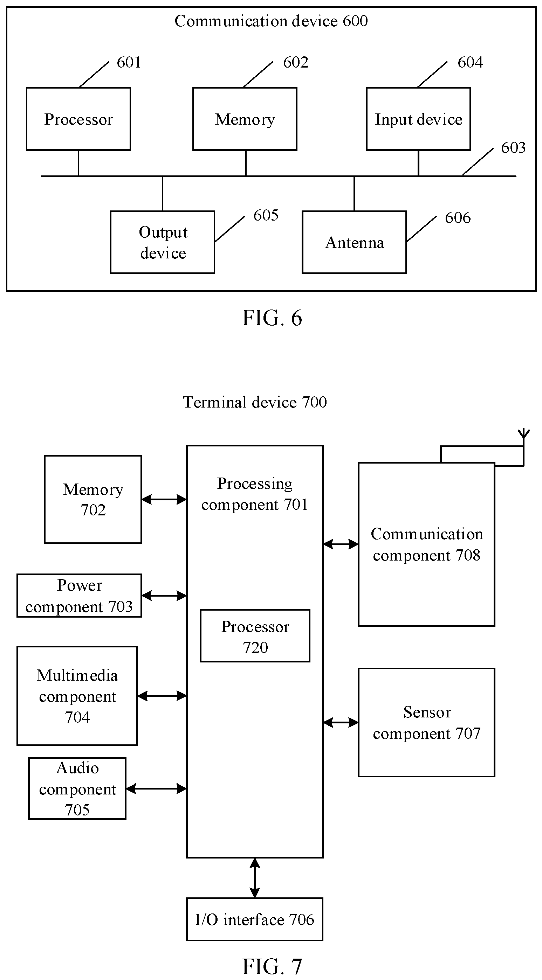

Based on the same inventive concept, the embodiments of the present disclosure provide an electronic device, which may be the terminal device or the access network device described in one or more of the above embodiments. FIG. 6 is a schematic structural diagram of an electronic device in an embodiment of the present disclosure. As shown in FIG. 6, the communication device 600 uses general computer hardware, including a processor 601, a memory 602, a bus 603, an input device 604 and an output device 605.

In some possible implementations, the memory 602 may include a computer storage medium in the form of volatile and/or non-volatile memory, such as a read-only memory and/or a random access memory. The memory 602 may store an operating system, application programs, other program modules, executable code, program data, user data, and the like.

The input device 604 may be used to enter commands and information into the electronic device, such as a keyboard or a pointing device such as a mouse, a trackball, a touch pad, a microphone, a joystick, a game pad, a satellite television antenna, a scanner, or a similar device. These input devices may be connected to the processor 601 via the bus 603.

The output device 605 may be used for the electronic device to output information. In addition to the monitor, the output device 605 may also be other peripheral output devices, such as a speaker and/or a printing device. These output devices may also be connected to the processor 601 through the bus 603.

The electronic device may be connected to a network through the antenna 606, such as a local area network (LAN). In a networked environment, the computer-executed instructions stored in the control device may be stored in a remote storage device and are not limited to local storage.

When the processor 601 in the electronic device executes the executable code or application program stored in the memory 602, the electronic device executes the beam reporting method on the terminal device side or the access network device side in the above embodiments. For the specific execution process, the above embodiments may be referred to, which will not be described again here.

In addition, the above-mentioned memory 602 stores computer-executed instructions for realizing the functions of the receiving module 410, the processing module 420 and the sending module 430 in FIG. 4. The functions/implementation procedures of the receiving module 410, the processing module 420 and the sending module 430 in FIG. 6 can all be implemented by the processor 601 in FIG. 6 calling the computer-executed instructions stored in the memory 602. For specific implementation procedures and functions, the above-mentioned related embodiments are referred to.

Alternatively, the above-mentioned memory 602 stores computer-executed instructions for implementing the functions of the sending module 510 and the receiving module 520 in FIG. 5. The functions/implementation procedures of the sending module 510 and the receiving module 520 in FIG. 5 can be implemented by the processor 601 in FIG. 6 calling the computer-executed instructions stored in the memory 602. For specific implementation procedures and functions, the above-mentioned related embodiments are referred to.

Based on the same inventive concept, the embodiments of the present disclosure provide a terminal device that is consistent with the terminal device in one or more of the above embodiments. Optionally, the terminal device may be a mobile phone, a computer, a digital broadcast terminal, a messaging device, a game console, a tablet, a medical device, exercise equipment, a personal digital assistant, etc.

FIG. 7 is a schematic structural diagram of a terminal device in an embodiment of the present disclosure. As shown in FIG. 7, the terminal device 700 may include one or more of the following components: a processing component 701, a memory 702, a power component 703, a multimedia component 704, an audio component 705, an input/output (I/O) interface 706, a sensor component 707 and a communication component 708.

The processing component 701 generally controls the overall operations of the terminal device 700, such as the operations associated with display, telephone calls, data communications, camera operations, and recording operations. The processing component 701 may include one or more processors 710 to execute instructions to complete all or part of the steps of the methods described above. Moreover, the processing component 701 may include one or more modules which facilitate interaction between the processing component 701 and other components. For instance, the processing component 701 may include a multimedia module to facilitate the interaction between the multimedia component 704 and the processing component 701.

The memory 702 is configured to store various types of data to support the operations of the device 700. Examples of such data include instructions for any applications or methods operated on the terminal device 700, contact data, phonebook data, messages, pictures, videos, etc. The memory 702 may be implemented by any type of volatile or non-volatile storage devices, or a combination thereof, such as a static random access memory (SRAM), an electrically erasable programmable read-only memory (EEPROM), an erasable programmable read-only memory (EEPROM), a programmable read-only memory (EPROM), a programmable read-only memory (PROM), a read-only memory (ROM), a magnetic memory, a flash memory, a magnetic or optical disk.

The power component 703 provides power to various components of the terminal device 700. The power component 703 may include a power management system, one or more power sources, and other components associated with the generation, management, and distribution of power in the terminal device 700.

The multimedia component 704 includes a screen providing an output interface between the terminal device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or slide action, but also sense a period of time and a pressure associated with the touch or slide action. In some embodiments, the multimedia component 704 includes a front camera and/or a rear camera. The front camera and/or the rear camera may receive an external multimedia data while the device 700 is in an operation mode, such as a photographing mode or a video mode. Each of the front camera and the rear camera may be a fixed optical lens system or have focus and optical zoom capability.

The audio component 705 is configured to output and/or input audio signals. For example, the audio component 705 includes a microphone (MIC) configured to receive an external audio signal when the terminal device 700 is in an operation mode, such as a call mode, a recording mode, and a voice recognition mode. The received audio signal may be further stored in the memory 702 or transmitted via the communication component 708. In some embodiments, the audio component 705 further includes a speaker to output audio signals.

The I/O interface 706 provides an interface between the processing component 701 and peripheral interface modules, such as a keyboard, a click wheel, buttons, and the like. The buttons may include, but are not limited to, a home button, a volume button, a starting button, and a locking button.

The sensor component 707 includes one or more sensors to provide status assessments of various aspects of the terminal device 700. For example, the sensor component 707 may detect an open/closed status of the device 700, relative positioning of components, e.g., the display and the keypad, of the terminal device 700, a change in position of the terminal device 700 or a component of the terminal device 700, a presence or absence of user contact with the terminal device 700, an orientation or an acceleration/deceleration of the terminal device 700, and a change in temperature of the terminal device 700. The sensor component 707 may include a proximity sensor configured to detect the presence of nearby objects without any physical contact. The sensor component 707 may also include a light sensor, such as a CMOS or CCD image sensor, for use in imaging applications. In some embodiments, the sensor component 707 may also include an acceleration sensor, a gyroscope sensor, a magnetic sensor, a pressure sensor, or a temperature sensor.

The communication component 708 is configured to facilitate communication, wired or wirelessly, between the terminal device 700 and other devices. The terminal device 1000 can access a wireless network based on a communication standard, such as Wi-Fi, 2G or 3G, or a combination thereof. In one exemplary embodiment, the communication component 708 receives a broadcast signal or broadcast related information from an external broadcast management system via a broadcast channel. In one exemplary embodiment, the communication component 708 further includes a near field communications (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the terminal device 700 may be configured by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for implementing the above-described methods.

Based on the same inventive concept, the embodiments of the present disclosure provide an access network device that is consistent with the access network device in one or more of the above embodiments.

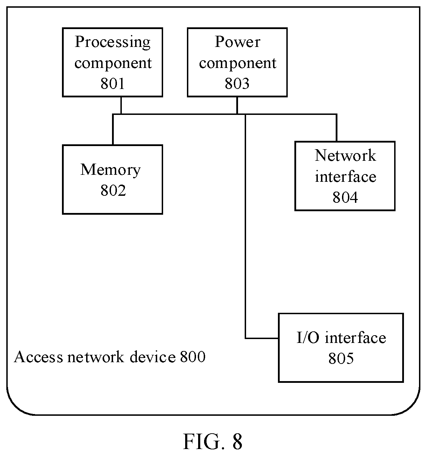

FIG. 8 is a schematic structural diagram of an access network device in an embodiment of the present disclosure. As shown in FIG. 8, the access network device 800 may include a processing component 801, which further includes one or more processors, and a memory resource represented by a memory 802 for storing instructions executable by the processing component 801, such as an application program. The application program stored in the memory 802 may include one or more modules, each corresponding to a set of instructions. In addition, the processing component 801 is configured to execute instructions to perform any of the foregoing methods applied to the access network device.

The access network device 800 may further include a power component 803 configured to perform power management of the access network device 800, a wired or wireless network interface 804 configured to connect the access network device 800 to a network, and an input/output (I/O) interface 805. The access network device 800 may operate based on an operating system stored in the memory 802, such as Windows Server^{™}, Mac OS X^{™}, Unix^{™}, Linux^{™}, FreeBSD^{™} or the like.

Based on the same inventive concept, the embodiments of the present disclosure also provide a computer-readable storage medium. Instructions are stored in the computer-readable storage medium. When the instructions are run on the computer, it is used to execute the beam reporting method on the terminal device side or the access network device side in one or more of the above embodiments.

Based on the same inventive concept, the embodiments of the present disclosure also provide a computer program or computer program product. When the computer program product is executed on the computer, the computer is caused to implement the beam reporting method on the terminal device side or the access network device side in one or more of the above embodiments.

Other embodiments of the present disclosure will be apparent to those skilled in the art from consideration of the specification and practice of the contents disclosed here. The present disclosure is intended to cover any variations, uses, or adaptations of the present disclosure, which follows the general principles thereof and includes the common knowledge or habitual technical means in this technical field that is not disclosed in the present disclosure. The specification and the embodiments are considered as exemplary only, with a true scope and spirit of the present disclosure being indicated by the appending claims.

It will be appreciated that the present disclosure is not limited to the exact construction that has been described above and illustrated in the accompanying drawings, and various modifications and changes can be made without departing from the scope thereof. The scope of the present disclosure is only limited by the appended claims.

## Claims

1. A method for beam reporting, applied to a terminal device, wherein the method comprises:
receiving a channel state information (CSI) report setting from an access network device, wherein the CSI report setting comprises a report quantity corresponding to an uplink simultaneous transmission from multiple panels;
performing a beam measurement on N beams configured by the access network device according to the CSI report setting, wherein N is an integer greater than or equal to 1; and
sending a CSI report to the access network device according to a measurement result, wherein the CSI report carries report quantities corresponding to M beams among the N beams, and M is an integer greater than or equal to 1 and less than or equal to N.

2. The method according to claim 1, wherein the CSI report further carries a terminal capability value set index corresponding to each of the M beams.

3. The method according to claim 1, wherein a reporting parameter based on beam pair in the CSI report setting is configured to be enabled;
the report quantity comprises: a channel state information resource signal resource indicator (CRI) or a synchronization signal block resource indicator (SSBRI) corresponding to each of the M beams, and a multi-panel uplink simultaneous transmission parameter corresponding to the CRI or the SSBRI.

4. The method according to claim 3, wherein the report quantity further comprises: a layer 1 reference signal received power (L1-RSRP) or a layer 1 signal to interference plus noise ratio (L1-SINR) corresponding to the CRI or the SSBRI.

5. The method according to claim 4, wherein the M beams comprise M/2 beam pairs, each beam pair in the M/2 beam pairs corresponds to multiple panels of the terminal device one by one, and M is an integer greater than or equal to 2.

6. The method according to claim 5, wherein each beam pair in the M/2 beam pairs is used for transmission between the terminal device and one transmit/receive point (TRP) or two TRPs.

7. The method according to claim 1, wherein a reporting parameter based on beam pair in the CSI report setting is configured to be disabled;
the report quantity comprises: a CRI or an SSBRI corresponding to each of the M beams, and an L1-RSRP or an L1-SINR corresponding to the CRI or the SSBRI.

8. The method according to claim 7, wherein the M beams correspond to at least one panel of the terminal device one by one, and M is an integer greater than or equal to 2.

9. The method according to claim 8, wherein each of the M beams is used for transmission between the terminal device and 1 TRP or 2 TRPs.

10. The method according to claim 1, wherein in a case of M=1, the M beam is an optimal beam with an optimal beam measurement result among the N beams, and the CSI report carries a report quantity corresponding to the optimal beam.

11. The method according to claim 1, further comprising:
determining that one or more beams do not support the uplink simultaneous transmission from multiple panels;
sending a CSI report to the access network device according to the measurement result, wherein the CSI report does not carry the report quantity corresponding to the one or more beams.

12. The method according to claim 1, wherein a reporting manner of the CSI report comprises at least one of:
periodic reporting;
semi-periodic reporting;
aperiodic reporting.

13. The method according to claim 1, wherein the CSI report is used for at least one of:
single downlink control information (S-DCI) scheduled transmission;
multiple downlink control information (M-DCI) scheduled transmission.

14. A method for beam reporting, applied to an access network device, wherein the method comprises:
sending a channel state information (CSI) report setting to a terminal device, wherein the CSI report setting comprises a report quantity corresponding to an uplink simultaneous transmission from multiple panels; and
receiving a CSI report from the terminal device, wherein the CSI report carries report quantities corresponding to M beams among N beams configured by the access network device, N is an integer greater than or equal to 1, and M is an integer greater than or equal to 1 and less than or equal to N.

15. The method according to claim 14, wherein the CSI report further carries a terminal capability value set index corresponding to each of the M beams.

16. The method according to claim 14, wherein a reporting parameter based on beam pair in the CSI report setting is configured to be enabled;
the report quantity comprises: a channel state information resource signal resource indicator (CRI) or a synchronization signal block resource indicator (SSBRI) corresponding to each of the M beams, and a multi-panel uplink simultaneous transmission parameter corresponding to the CRI or the SSBRI.

17. The method according to claim 16, wherein the report quantity further comprises: a layer 1 reference signal received power (L1-RSRP) or a layer 1 signal to interference plus noise ratio (L1-SINR) corresponding to the CRI or the SSBRI.

18. The method according to claim 17, wherein the M beams comprise M/2 beam pairs, each beam pair in the M/2 beam pairs corresponds to multiple panels of the terminal device one by one, and M is an integer greater than or equal to 2.

19. The method according to claim 18, wherein each beam pair in the M/2 beam pairs is used for transmission between the terminal device and one transmit/receive point (TRP) or two TRPs.

20. The method according to claim 15, wherein a reporting parameter based on beam pair in the CSI report setting is configured to be disabled;
the report quantity comprises: a CRI or an SSBRI corresponding to each of the M beams, and an L1-RSRP or an L1-SINR corresponding to the CRI or the SSBRI.

21. The method according to claim 20, wherein the M beams correspond to at least one panel of the terminal device one by one, and M is an integer greater than or equal to 2.

22. The method according to claim 21, wherein each of the M beams is used for transmission between the terminal device and 1 TRP or 2 TRPs.

23. The method according to claim 14, wherein in a case of M=1, the M beam is an optimal beam with an optimal beam measurement result among the N beams, and the CSI report carries a report quantity corresponding to the optimal beam.

24. The method according to claim 14, wherein the CSI report does not carry report quantities corresponding to the N beams.

25. The method according to claim 14, wherein a reporting manner of the CSI report comprises at least one of:
periodic reporting;
semi-periodic reporting;
aperiodic reporting.

26. The method according to claim 14, wherein the CSI report is used for at least one of:
single downlink control information (S-DCI) scheduled transmission;
multiple downlink control information (M-DCI) scheduled transmission.

27. A beam reporting apparatus, applied to a terminal device, wherein the apparatus comprises:
a receiving module, configured to receive a channel state information (CSI) report setting from an access network device, wherein the CSI report setting comprises a report quantity corresponding to an uplink simultaneous transmission from multiple panels;
a processing module, configured to perform a beam measurement on N beams configured by the access network device according to the CSI report setting, wherein N is an integer greater than or equal to 1; and
a sending module, configured to send a CSI report to the access network device according to a measurement result, wherein the CSI report carries report quantities corresponding to M beams among the N beams, and M is an integer greater than or equal to 1 and less than or equal to N.

28. A beam reporting apparatus, applied to an access network device, wherein the apparatus comprises:
a sending module, configured to send a CSI report setting to a terminal device, wherein the CSI report setting comprises a report quantity corresponding to an uplink simultaneous transmission from multiple panels; and
a receiving module, configured to receive a CSI report from the terminal device, wherein the CSI report carries report quantities corresponding to M beams among N beams configured by the access network device, N is an integer greater than or equal to 1, and M is an integer greater than or equal to 1 and less than or equal to N.

29. An electronic device, comprising:
a memory, configured to store computer-executable instructions; and
a processor, connected to the memory, and configured to execute the computer-executable instructions to implement the beam reporting method according to any one of claims 1 to 13, or the beam reporting method according to any one of claims 14 to 26.

30. A computer storage medium that stores computer-executable instructions, wherein the computer-executable instructions, after being executed by a processor, can implement the beam reporting method according to any one of claims 1 to 13, or the beam reporting method according to any one of claims 14 to 26.
